**Europäisches Patentamt**

**European Patent Office**

**Office européen des brevets**

(19)

(11) Veröffentlichungsnummer : **0 361 072 B1**

(12) # EUROPÄISCHE PATENTSCHRIFT

(45) Veröffentlichungstag der Patentschrift :
**22.04.92 Patentblatt 92/17**

(51) Int. Cl.⁵ : **A47J 37/08**

(21) Anmeldenummer : **89115414.8**

(22) Anmeldetag : **21.08.89**

(54) **Elektrischer Brotröster.**

(30) Priorität : **09.09.88 DE 3830632**

(43) Veröffentlichungstag der Anmeldung :
**04.04.90 Patentblatt 90/14**

(45) Bekanntmachung des Hinweises auf die
Patenterteilung :
**22.04.92 Patentblatt 92/17**

(84) Benannte Vertragsstaaten :
**AT CH DE ES FR GB IT LI NL SE**

(56) Entgegenhaltungen :
**DE-B- 1 272 471**

(73) Patentinhaber : **Braun Aktiengesellschaft**
**Rüsselsheimer Strasse 22**
**W-6000 Frankfurt/Main (DE)**

(72) Erfinder : **Hahnewald, Andrea**
**Geschwindstrasse 15**
**W-6073 Egelsbach (DE)**
Erfinder : **Möthrath, Georg**
**Blümgesgrund 19**
**W-6460 Gelnhausen (DE)**
Erfinder : **Schamberg, Stefan**
**Am Hang 1**
**W-6370 Oberursel (DE)**
Erfinder : **Ullrich, Volker**
**Heckenweg 2**
**W-6450 Hanau 9 (DE)**

EP 0 361 072 B1

Jouve, 18, rue Saint-Denis, 75001 PARIS

## Beschreibung

Die Erfindung betrifft einen elektrischen Brotröster nach dem Oberbegriff des Patentanspruchs 1.

Gattungsgemäße Brotröster ohne Krümelauffangschale - im folgenden kurz Krümelschale genannt - sind allgemein bekannt. So ist z.B. in der DE-AS 17 53 119 ein Brotröster beschrieben, bei dem das Röstgut auf einer Röstgutauflage stehend mit einem senk- und hebbaren Schlitten in eine durch das Brotröstergehäuse umschlossene Röstkammer gebracht werden kann, in der eine elektrische Heizvorrichtung angeordnet ist. Der Schlitten kann dabei mittels eines Handgriffs gegen die Wirkung einer Federkraft in seine untere Endstellung (Betriebsstellung) gebracht werden, in der die Heizvorrichtung eingeschaltet ist und in der der Schlitten selbsttätig für die Dauer des Röstvorgangs arretiert bleibt. Durch verschiedenartige, mechanisch arbeitende Vorrichtungen (vgl. z.B. DE-OS 29 02 212) oder auch durch Messung des Bräunungsgrads des Röstguts (vgl. DE-PS 37 09 571) kann die Dauer des Röstvorgangs gesteuert werden. Letzterer wird dadurch beendet, daß die Arretierung des Schlittens gelöst wird, so daß dieser sich unter der Wirkung der Federkraft in seine obere Endstellung (Ausgabestellung) zurückbewegt, wodurch die Heizvorrichtung wieder von ihrer Spannungsversorgung getrennt wird.

Ein gattungsgemäßer Brotröster mit Krümelauffangschale ist beispielsweise aus der GB-2 117 627 A bekannt. Bei dem darin beschriebenen Brotröster kann die flache, oberhalb von dessen Boden angeordnete Krümelschale entweder von der Stirnseite oder auch von einer Längswand des Brotrösters her in dessen Gehäuse eingeschoben und zu ihrer Entleerung und Reinigung aus dem Gehäuse auch wieder herausgezogen werden. Um die eingeschobene Krümelschale in ihrer Endlage zu sichern, sind zum einen innerhalb des Gehäuses des Brotrösters Gleitflächen zur Aufnahme der Längsseiten der im wesentlichen rechteckigen Krümelschale vorgesehen und zum anderen an einer ihrer beiden Schmalseiten elastische Rastvorsprünge angebracht, die in der Endlage der Krümelschale in am Gehäuse des Brotrösters ausgebildete, entsprechende Schlitze eingreifen.

Hierdurch ist die Krümelschale zwar gegen ein unbeabsichtigtes Herausgleiten aus dem Gehäuse des Brotrösters gesichert, jedoch kann dieser ohne weiteres auch ohne die eingesetzte Krümelschale in Betrieb genommen werden. Ganz gleich, ob die Krümelschale aus dem Gehäuse des Brotrösters an einer seiner beiden Stirnseiten oder seitlich an einer seiner beiden Längsseiten einsetzbar ist, erhöht sich bei dem bekannten Brotröster während des Betriebs ohne eingesetzte Krümelschale die Gefahr, daß der Benutzer einen elektrischen Schlag erleidet. Diese Gefährdung beruht auf der Tatsache, daß bei nicht eingesetzter Krümelschale stromführende Teile nun auch noch von der Unterseite des Gehäuses her zugänglich sind, nachdem bei derartigen Brotröstern die Zugänglichkeit nicht isolierter, elektrischer Bauteile durch die Eingabeschlitze von der Oberseite des Gehäuses her ohnehin nur beschränkt vermeidbar ist.

Es ist weiterhin zu beachten, daß durch die zusätzliche Öffnung des Brotrösters im Bodenbereich während des Betriebs Wärmestrahlung austreten kann. Dies wirkt sich zusammen mit den dadurch ebenfalls veränderten Strömungsverhältnissen innerhalb der Röstkammer einerseits auf das Röstergebnis aus, das daher nicht mehr einstellbar und vorhersehbar ist. Andererseits können durch die austretende Wärme Kunststoffteile im Bodenbereich des Brotrösters sowie seine darunter sich befindliche, jeweilige Stellfläche beschädigt werden oder gar verformt werden.

Bei elektrischen Brotröstern mit einem sogenannten integrierten Kühlsystem, bei denen die die Seitenwände des Brotrösters kühlende Luft der Röstkammer zugeführt wird (vgl. DE-OS 35 16 553), wird bei nicht eingeschobener Krümelschale zudem der Verlauf des kühlenden Luftstroms und die Kühlwirkung insgesamt durch die zusätzliche, am Boden des Gehäuses entstandene, große Öffnung erheblich beeinträchtigt, wodurch es zu einer stellenweise auftretenden Oberhitzung von Gehäuseteilen kommen kann.

Aus der DE-AS 12 72 471 ist ein gattungsgemäßer Brotröster bekannt, der an seiner Unterseite entweder eine schwenk- und verriegelbare Klappe oder einen horizontal beweglichen Schieber aufweist, der in seiner Endlage verrastet werden kann. Sowohl die Klappe als auch der Schieber übernehmen dabei die Funktion einer Krümelschale.

Entfernt man die Klappe bzw. den Schieber aus ihrer verriegelten bzw. eingerasteten Endlage, wird dadurch ein doppelpoliger elektrischer Schalter geöffnet und die Spannungsversorgung der Heizvorrichtung des Brotrösters unterbrochen. Auf diese Weise wird sichergestellt, daß bei geöffneter Klappe bzw. herausgezogenem Schieber keine Gefahr besteht, daß der Benutzer des Brotrösters von der Unterseite des Gehäuses des Brotrösters her mit stromführenden Teilen in Berührung kommt. Eine in der DE-AS 12 72 471 beschriebene Weiterentwicklung des Brotrösters besteht darin, daß dann, wenn der Schlitten sich in seiner Betriebsstellung befindet, es durch eine mechanische Kopplung zwischen Schlitten einerseits und Klappe oder Schieber andererseits dem Benutzer unmöglich gemacht wird, die Klappe bzw. den Schieber aus der Endlage zu entfernen.

Diese Weiterentwicklung ändert aber nichts an der nachteiligen Tatsache, daß dann, wenn der Schlitten bei geöffneter Klappe bzw. herausgezogenem Schieber in seine Betriebsstellung gebracht worden ist, er sich

2

EP 0 361 072 B1

dort verhakt und nur mit Hilfe einer zusätzlichen mechanischen Vorrichtung wieder in seine Ausgangsstellung gebracht werden kann. Dies hängt damit zusammen, daß die Arretiervorrichtung den Schlitten unabhängig davon festhält, ob die Klappe bzw. der Schieber sich in der Endlage befinden.

Ein weiterer Nachteil des in der DE-AS 12 72 471 beschriebenen Brotrösters besteht darin, daß neben dem von der Klappe bzw. dem Schieber betätigten doppelpoligen Sicherheitsschalter es noch einen weiteren, vom Schlitten selbst betätigten Schalter geben muß. Dieser sorgt nämlich dafür, daß bei geschlossenem doppelpoligen Schalter die Heizvorrichtung nur dann an ihre Spannungsversorgung gelegt wird, wenn sich der Schlitten in seiner Betriebsstellung befindet.

Der Erfindung liegt daher die Aufgabe zugrunde, einen Brotröster mit Krümelschale zu schaffen, dessen Schlitten sich bei nicht bis in ihre Endlage eingeschobener Krümelschale nicht in seiner Betriebsstellung verhaken kann und dessen Heizvorrichtung über nur einen elektrischen Schalter mit ihrer Spannungsversorgung verbunden oder wieder davon getrennt werden kann.

Diese Aufgabe wird für einen Brotröster nach dem Oberbegriff des Patentanspruchs 1 durch die in dessen kennzeichendem Teil aufgeführten Merkmale gelöst.

Durch die Lösung nach der Erfindung nach Anspruch 1 entsteht auf äußerst einfache und damit auch preiswerte Weise ein Brotröster, bei dem es mit mechanischen Mitteln verhindert wird, daß er erstens bei nicht bis in ihre Endlage eingeschobener Krümellage in Betrieb genommen werden kann und bei dem zweitens der Röstvorgang nach seiner Inbetriebnahme selbsttätig abgebrochen wird, wenn die Krümelschale aus ihrer Endlage entfernt wird.

Ein Brotröster nach dem Patentanspruch 1 weist den Vorteil auf, daß er die mit einer Krümelschale verbundenen Vorzüge, wie der leichten Reinigung seines Gehäuseinneren und der Entfernung von Krümeln, die ansonsten durch ihr Verkohlen zu einer Geruchsbelästigung führen, mit den Vorzügen von Brotröstern verbindet, die keine Krümelschale aufweisen. Es wird nämlich nahezu unmöglich, daß die Auflage des Brotrösters während des Röstvorgangs in Mitleidenschaft gezogen wird und daß es bei Brotröstern mit integriertem Kühlsystem zu einer stellenweise auftretenden Oberhitzung des Gehäuses kommt.

Dadurch, daß der erfindungsgemäße Brotröster nicht in Betrieb genommen werden kann, wenn die Krümelschale nicht bis in ihre Endlage eingeschoben ist, ist dessen Benutzer auch weitgehend von der Berührung nicht isolierter, unter Spannung stehender Bauteile geschützt.

Dadurch, daß die Arretierung des Schlittens bei nicht bis in ihre Endlage eingeschobener Krümelschale nicht wirksam werden kann, ergibt der weitere Vorteil, daß sich der Schlitten in dieser Stellung nicht verhaken kann, so daß nicht die Notwendigkeit besteht, den Brotröster mit einer mechanischen Zusatzeinrichtung zu versehen, die es erlaubt, den Schlitten aus seiner Betriebsstellung zu lösen, ohne dazu einen Röstvorgang durchführen zu müssen.

Ein weiterer Vorteil eines Brotrösters nach dem Patentanspruch 1 besteht darin, daß die Spannungsversorgung der Heizvorrichtung nur über einen einzigen elektrischen Schalter, nämlich einen von dem Schlitten betätigten Schalter, erfolgt, der in Betriebsstellung geschlossen und in Ausgabestellung des Schlittens offen ist.

Eine zweite Lösung nach der Erfindung, die ebenfalls unter allen Umständen die Inbetriebnahme bei nicht oder bei nicht bis in ihre Endlage eingeschobener Krümelschale verhindert, wird durch den Gegenstand des Anspruchs 2 gegeben. Diese zweite Lösung nach der Erfindung weist in Bezug auf die Funktion des Brotrösters alle bereits im Zusammenhang mit der Vorteilsbeschreibung der ersten Ausführungsform genannten Vorteile auf, auf die hiermit Bezug genommen wird. Darüber hinaus gewährleistet eine auf elektromagnetischer Wechselwirkung beruhende Steuerung der Arretierung des Schlittens eine besonders hohe Betriessicherheit und einen geringen Platzbedarf.

Bei der durch den Anspruch 3 beschriebenen Weiterbildung der Erfindung werden einerseits die vorstehend genannten Vorteile einer elektrischen Steuerung und andererseits die Vorteile einer mechanischen Steuerung, nämlich geringer finanzieller Aufwand, in günstiger Weise miteinander verbunden.

Wird bei einem Brotröster nach Anspruch 3 sowohl die Krümelschale als auch der Schieber nach Anspruch 4 ausgebildet, entsteht ein Brotröster, der bei nicht bis in ihre Endlage eingeschobener Krümelschale bzw. Abbruch des Röstvorgangs bei Entfernung der Krümelschale auf äußerst einfache, aber dennoch funktionssichere Weise ausgestaltet sind.

Ein nach Anspruch 5 ausgebildeter Brotröster hat schließlich den Vorteil, daß seine Heizvorrichtung bei nicht bis in ihre Endlage eingeschobener Krümelschale oder bei ihrer Entfernung auch dann nicht mit ihrer Spannungsversorgung verbunden wird, wenn der Benutzer des Brotrösters den Schlitten entgegen der auf ihn wirkenden Federkraft mittels des Handgriffs in seiner Betriebsstellung hält.

Im folgenden werden zwei Ausführungsformen der Erfindung anhand der Zeichnung näher erläutert. Es zeigen jeweils nur in schematischer Darstellung der für die Erfindung wesentlichen Teile:

Fig. 1 die Arbeitsweise eines gattungsgemäßen Brotrösters und die einer Vorrichtung zur Erhöhung von dessen Betriebssicherheit,

Fig. 2 ein erstes Ausführungsbeispiel des erfindungsgemäßen Brotrösters,

Fig. 3 ein zweites Ausführungsbeispiel des erfindungsgemäßen Brotrösters, und

Fig. 4 einen Ausschnitt aus der elektrischen Schaltung des Brotrösters nach Fig. 3.

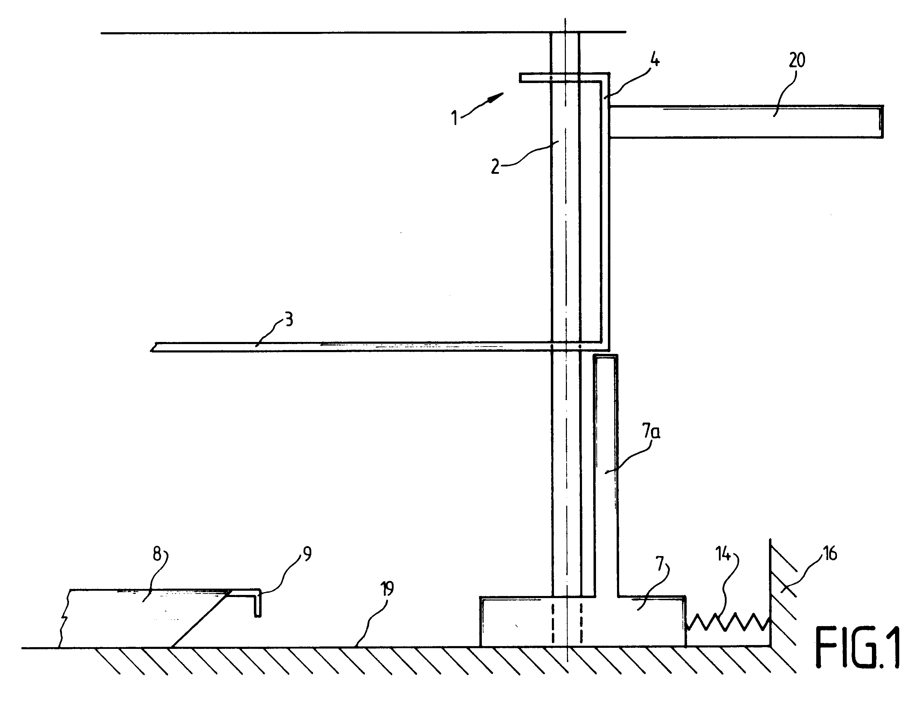

In Fig. 1 ist ein in einer Röstkammer eines Brotrösters von einer Ausgabestellung in eine Betriebsstellung in einer Führung 2 beweglicher Schlitten 1 mit einer Röstgutauflage 3 zu erkennen, auf der ein Röstgut aufgelegt werden kann, um in die Röstkammer eingebracht zu werden. Dort wird es von einer nicht dargestellten elektrischen Heizvorrichtung geröstet. Die Röstgutauflage 3 wird zu diesem Zweck in bekannter Weise mittels eines in der Stirnseite des Gehäuses des Brotrösters geführten und einem Bügel 4 des Schlittens 1 angeformten Handgriff 20 gegen die Wirkung einer Federkraft nach unten bewegt.

Wenn der Schlitten 1 in seiner Betriebsstellung angelangt ist, schließt er in bekannter Weise einen nicht dargestellten Schalter, wodurch die Heizvorrichtung an ihre Spannungsversorgung gelegt wird. Der Schlitten 1 wird in dieser Stellung durch eine in der Fig. 1 ebenfalls nicht dargestellte Arretiervorrichtung festgehalten und bewegt sich nach Beendigung des Röstvorgangs unter der Wirkung der Federkraft wieder in seine Ausgabestellung zurück.

Der Brotröster weist am Boden seines Gehäuses einen Schieber 7 auf, der gegen die Wirkung einer zwischen einer Gehäusewand 16 des Brotröster und ihm selbst angebrachten Feder 14 horizontal verschoben werden kann, wobei er in nicht dargestellter Weise auch durch die Führung 2 geführt wird. Eine ebenfalls längs des Bodens des Brotrösters einschiebbare Krümelschale 8 weist ein ihr angeformtes Winkelstück 9 auf, das beim Einschieben der Krümelschale 8 kurz vor Erreichen ihrer Endlage mit dem Schieber 7 zusammenwirkt. Die Krümelschale 8 wird in ihrer Endlage, in der von ihr sämtliche von der Röstkammer ausgehende Krümel aufgefangen werden können, durch nicht näher beschriebene Mittel verriegelt.

Dem Schieber 7 ist ein vertikal sich erstreckender Ansatz 7a angeformt, der bei nicht oder nicht bis in ihre Endlage eingeschobener Krümelschale 8 aufgrund der Wirkung der Feder 14 unterhalb des Bügels 4 des Schlittens 1 zu liegen kommt. Auf diese Weise wird dem Schlittens 1 dann der Weg in seine Betriebsstellung versperrt, wenn sich die Krümelschale 8 nicht in ihrer Endlage befindet, so daß in diesem Fall die Heizvorrichtung des Brotrösters nicht an ihre Spannungsversorgung gelegt und damit der Brotröster nicht in Betrieb genommen werden kann.

Wird die Krümelschale 8 längs des Bodens des Brotrösters bis in ihre Endlage eingeschoben und dort durch die nicht dargestellten Mittel verriegelt, gerät der vertikal sich erstreckende Ansatz 7a des Schiebers 7 aus der Bewegungsbahn des Bügels 4, so daß der Schlitten 1 in seine untere Endlage gebracht werden kann, in der er durch ebenfalls nicht dargestellte Mittel für die Dauer des Röstvorgangs arretiert wird.

Auf diese Weise ist sichergestellt, daß die Heizvorrichtung und damit der Brotröster selbst nur bei bis in ihre Endlage eingeschobene Krümelschale 8 in Betrieb genommen werden können.

Befindet sich der Schlitten 1 dagegen bereits in seiner Betriebsstellung und wird erst dann die Krümelschale 8 aus ihrer Endlage entfernt, bleibt der Brotröster jedoch weiter in Betrieb. Damit ist ein erfindungsgemäßer Brotröster gemäß dem Ausführungsbeispiel nach der Fig. 1 lediglich dahingehend gesichert, daß er bei nicht bis in ihre Endlage eingeschobener Krümelschale 8 nicht in Betrieb genommen werden kann.

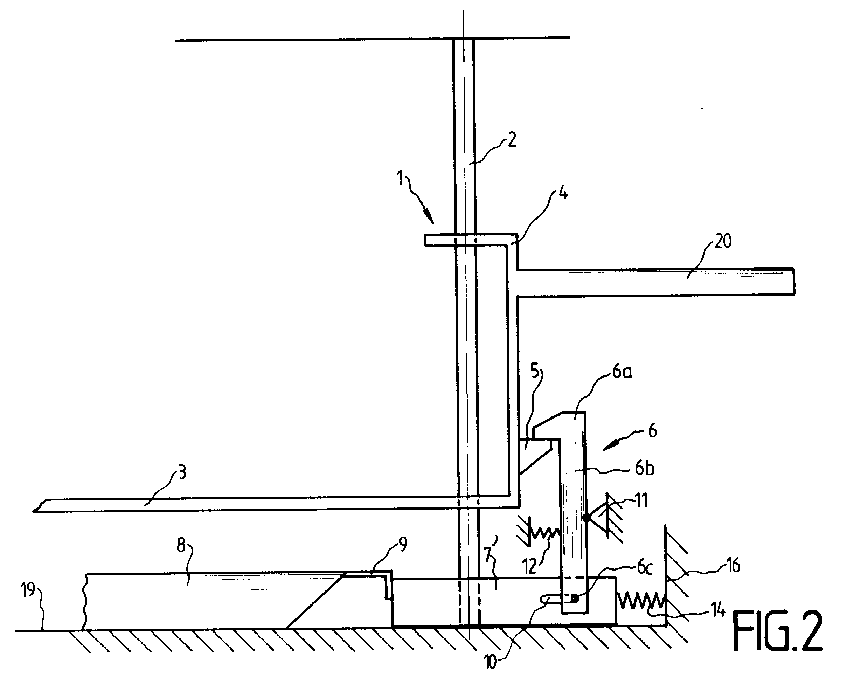

Auch der Brotröster nach dem Ausführungsbeispiel der Fig. 2 weist einen Schlitten 1 mit einer Röstgutauflage 3, einem Bügel 4 und einem daran angeformten Handgriff 20 auf. Wiederum wird der Schlitten 1 auf seinem Weg von seiner Ausgabestellung in seine Betriebsstellung durch die Führung 2 geführt. Auch bei diesem Ausführungsbeispiel erfolgt die Röstung eines Röstgutes dadurch, daß der Schlitten 1 in seiner unteren Endstellung gebracht und dort für die Dauer des Röstvorgangs arretiert wird und somit die Heizvorrichtung an ihre Spannungsversorgung gelegt wird.

Die Arretierung erfolgt mittels einer Arretiervorrichtung, die zum einen aus einer dem Bügel 4 des Schlittens 1 angeformten Rastnase 5 besteht und zum anderen einen um einen Lagerpunkt 11 parallel zur Bewegungsebene des Schlittens drehbaren Schwenkhebel 6 aufweist, der seinerseits an seinem einen Ende einen Haken 6a und an seinem anderen Ende einen Zapfen 6c aufweist. Der Schwenkhebel 6 steht darüber hinaus unter der Wirkung einer unterhalb des Lagerpunkts 11 in horizontaler Richtung angreifenden ersten Federkraft 12. Der Zapfen 6c des Schwenkhebels 6 wird in einem Langloch 10 geführt, das in einem ebenfalls wieder längs des Bodens des Brotrös2tergehäuses horizontal beweglichen Schieber 7 ausgebildet ist.

Unter der Annahme, daß der Schieber 7 die in Fig. 2 dargestellte Lage beibehält, erfolgt die Verriegelung des Schlittens 1 in der Betriebsstellung dadurch, daß die Rastnase 5 längs einer an dem Haken 6a ausgebildeten Abschrägung entlanggleitet und dabei den Schwenkhebel 6 im Uhrzeigersinn auslenkt. Wird der Schlitten 1 und damit die Rastnase 5 mittels des Handgriffs 20 soweit nach unten bewegt, daß sich die obere Begrenzung der Rastnase 5 unterhalb der unteren Begrenzung des Hakens 6a befindet, schnappt der Schwenkhebel 6 unter der Wirkung der Federkraft 12 wieder in seine in der Fig. 2 dargestellte Lage zurück und verriegelt dadurch den Schlitten 1 in seiner Betriebsstellung. In dieser Stellung wird wiederum die Heizvorrichtung an ihre Spannung gelegt und damit der Brotröster in Betrieb genommen, und zwar solange, bis durch in der Fig. 2 nicht dargestellte Mittel, beispielsweise durch einen Bimetallstreifen, der Schwenkhebel 6 im Uhrzeigersinn ausgelenkt wird, so daß sich der Schlitten 1 unter der Wirkung der Federkraft wieder in seine Ausgabestellung zurückbewegt. Als Folge davon wird die Heizvorrichtung des Brotrösters wieder von ihrer Spannungsversorgung getrennt und der Brotrösters damit außer Betrieb gesetzt.

Der Schieber 7, der ebenfalls durch die Führung 2 geführt werden kann, kann seine in der Fig. 2 gezeigte Lage nur deshalb einnehmen, weil er von einem der Krümelschale 8 angeformten Winkelstück gegen die Wirkung der Federkraft 14 in dieser Position gehalten wird. Die in der Fig. 2 dargestellte Lage der Krümelschale 8 entspricht dabei ihrer Endlage.

Ist die Krümelschale 8 nicht eingesetzt, so liegen folgende Verhältnisse vor:

Die Kraftkonstante der Feder 14 ist mit der Kraftkonstanten der Feder 12 so abgestimmt, daß bei nicht eingesetzter Krümelschale 8 das im Uhrzeigersinn auf den Schwenkhebel 6 über den Schieber 7 und den in seinem Langloch 10 geführten Zapfen 6c wirkende, von der Feder 14 ausgehende Drehmoment größer ist als das im Gegenuhrzeigersinn wirkende, von der Feder 12 ausgehende Drehmoment. Daher befindet sich der Schwenkhebel 6 bei nicht eingesetzter Krümelschale 8 grundsätzlich in einer Position, in der sein Haken 6a mit der Rastnase 5 des Schlittens 1 nicht mehr zusammenwirken kann. Aus diesem Grunde kann die Arretiervorrichtung nicht mehr wirksam werden, d.h., der Schlitten 1 des Brotrösters kann in seiner Betriebsstellung nicht mehr arretiert werden, so daß der Brotröster nicht anhaltend in Betrieb genommen werden kann, sondern die Heizvorrichtung nur solange mit ihrer Spannungsversorgung verbunden bleibt, als der Benutzer den Handgriff 20 in der unteren Stellung hält.

Ist der Schlitten 1 bereits in seiner Betriebsstellung arretiert und daher der Brotröster bereits in Betrieb und wird erst dann die Krümelschale 8 entfernt, dreht sich der Schwenkhebel 6 wiederum aufgrund seiner Kopplung mit dem Schieber 7 im Uhrzeigersinn, was dazu führt, daß der Schlitten 1 entriegelt wird, da seine Rastnase 5 den Haken 6a des Schwenkarms 6 nicht mehr untergreift.

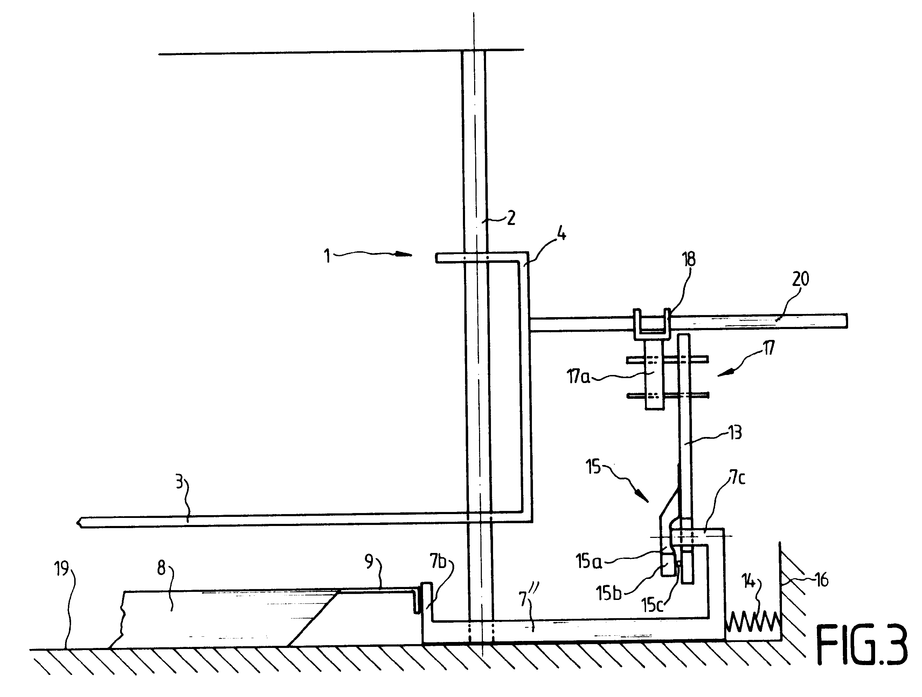

Auch bei dem in der Fig. 3 gezeigten Ausführungsbeispiel des erfindungsgemäßen Brotrösters kann der Schlitten 1 durch eine Arretiervorrichtung in seiner Betriebsstellung festgehalten werden.

Im Gegensatz zu dem in der Fig. 2 gezeigten Ausführungsbeispiel erfolgt die Arretierung des Schlittens 1 nicht auf mechanische Weise durch Formschluß eines Hakens mit einer Rastnase, sondern durch Kraftschluß mittels elektromagnetischer Kräfte.

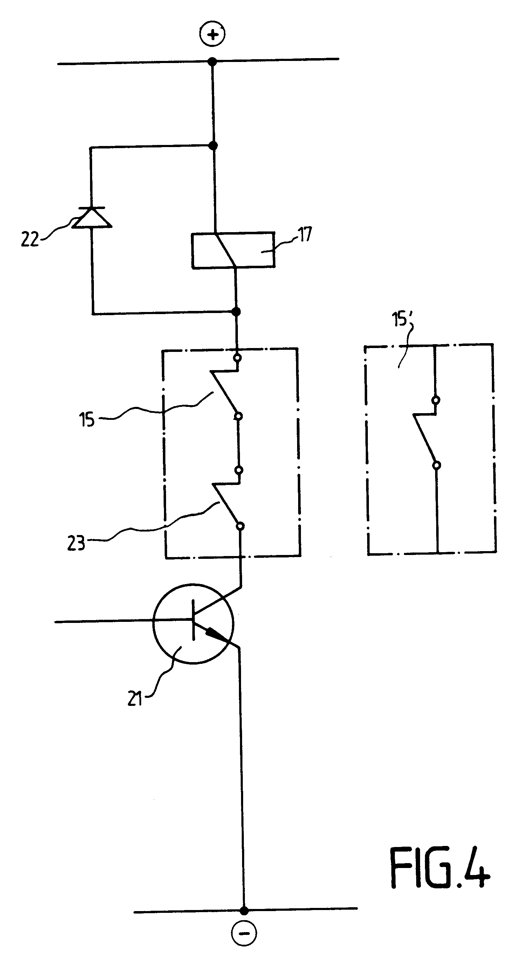

Zu diesem Zweck weist der Handgriff 20 des Schlittens 1 ein Joch 18 auf, welches bei abgesenktem Schlitten 1 einem Kern 17a eines Elektromagneten 17 gegenüberliegt, der seinerseits auf einer Leiterplatte 13 angebracht ist. Die Leiterplatte 13 wird auf eine in der Fig. 3 nicht dargestellte Weise mit Gleichspannung versorgt, die dadurch entsteht, daß an der Heizvorrichtung eine geeignete Wechselspannung abgegriffen und anschließend gleichgerichtet wird. Neben dem Elektromagneten 17 ist auf der Leiterplatte 13 ein Schalter 15 angeordnet, der einen elastisch verformbaren Schalterbügel 15a mit einer an dessen Ende angebrachten Kontaktfläche 15b aufweist. Während der Pluspol der Spannungsversorgung (vgl. Fig. 4) direkt mit einem der beiden Anschlüsse des Elektromagneten 17 verbunden ist, ist der andere Anschluß des Elektromagneten 17 mit dem Minuspol der Gleichspannungsquelle über den Schalter 15 verbindbar. Dazu ist es erforderlich, daß die Kontaktfläche 15b eine auf der Leiterplatte 13 angeordnete und ihr gegenüberliegende Gegenkontaktfläche 15c berührt. In diesem Fall ist der Stromkreis für den Elektromagneten 17 geschlossen. Wählt man eine entsprechende Stromstärke und dimensioniert man den Elektromagneten 17 hinsichtlich seiner Windungszahl und der Art seines Kernes 17a entsprechend, übt der Elektromagnet 17 auf das Joch 18 eine Kraft aus, die genügt, um den Schlitten 1 entgegen der Federwirkung in der in Fig. 3 gezeichneten Betriebsstellung zu arretieren.

Auch bei dem Ausführungsbeispiel nach Fig. 3 weist der Brotröster einen längs seines Gehäusebodens verschiebbaren Schieber 7 auf, der wiederum gegen die Wirkung einer Feder 14 horizontal längs der Führung 2 verschoben werden kann. Auch bei diesem Ausführungsbeispiel wirkt ein der Krümelschale 8 angeformtes Winkelstück 9 mit einem dem Schieber 7 angeformten, einfach abgewinkelten Ansatz 7b zusammen. Der Schieber 7 weist darüber hinaus auch wieder einen zweiten, in diesem Fall doppelt abgewinkelten Ansatz 7c auf, der die Leiterplatte 13 von der dem Bügel 15a gegenüberliegenden Seite her durchgreift und mit dem Bügel 15a auf folgende Weise zusammenwirkt:

Für den Fall, daß die Krümelschale 8 nicht oder nicht in ihrer Endlage in das Gehäuse eingeschoben worden ist, gleitet der Schieber 7 unter der Wirkung der von der Feder 14 ausgehenden Kraft soweit nach links, daß der elastisch verformbare Schalterbügel 15a soweit abgehoben wird, daß sich die Kontaktfläche 15b und die Gegenkontaktfläche 15c nicht mehr berühren. Das hat zur Folge, daß der Stromkreis für den Elektromagneten 17 unterbrochen ist. Dies hat zum einen die Konsequenz, daß bei nicht oder nicht bis in ihre Endlage eingeschobener Krümelschale 8 der Schlitten 1 nicht in seiner Betriebsstellung arretiert werden kann. Zum anderen hat es die Konsequenz, daß für den Fall, daß die Krümelschale 8 aus ihrer Endlage entfernt wird, der Stromkreis für den Elektromagneten 17 ebenfalls unterbrochen wird, was zur Folge hat, daß sich der Schlitten

unter Wirkung der Federkraft wieder in seine Ausgabestellung bewegt und damit die Heizvorrichtung wieder von ihrer Spannungsversorgung trennt und den bereits begonnenen Röstvorgang abbricht.

Auf diese Weise ist gewährleistet, daß zum einen die Inbetriebnahme der Heizvorrichtung bei nicht oder nicht bis in ihre Endlage in das Gehäuse eingeschobener Krümelschale 8 nicht möglich ist und daß zum anderen der Röstvorgang unterbrochen wird, wenn die Krümelschale 8 aus ihrer Endlage entfernt wird.

Fig. 4 zeigt in teilweise schematischer Darstellung eine Reihenschaltung aus dem Elektromagneten 17, dem Schalter 15, einem weiteren Schalter 23 und einem npn-Transistor 21, die an einer Gleichspannung liegen, deren Erzeugung vorstehend bereits beschrieben worden ist. Dem Elektromagneten 17 ist eine Diode 22 parallelgeschaltet, die die Aufgabe hat, den beim Öffnen des Elektromagneten 17 durch den Selbstinduktionseffekt entstehenden Spannungsstoß, inbesondere von dem Transistor 21, fernzuhalten. Der Schalter 23 dient als sogenannter "Notschalter", mit dem zweckmäßigerweise die meisten gattungsgemäßen Brotröster ausgestattet sind, um den Röstvorgang jederzeit abbrechen zu können. Durch entsprechende konstruktive Maßnahmen ist es möglich, den Schalter 15 und den Schalter 23 zu einem einzigen Schalter zusammenzufassen, wie es in der Fig. 4 mit dem Kasten 15′ angedeutet ist. In diesem Fall kann der Schalterbügel 15a einerseits durch den doppelt abgewinkelten Ansatz 7c des Schiebers und auch durch ein in der Fig. 4 nicht dargestelltes, mechanisches Betätigungsorgan zur "Notabschaltung" des Brotrösters ausgelenkt werden. Der Transistor 21 stellt ein weiteres Schaltelement dar, mit dem die Stromversorgung für den Haltemagnet 17 unterbrochen werden kann, was dann geschieht, wenn der Röstvorgang auf übliche Weise, d.h. entweder nach einer vorher gewählten Zeitspanne oder dann abgebrochen wird, wenn das Röstgut eine vorher einstellbare Bräunung erreicht hat.

Während der Schalter 15 bei dem in den Fig. 3 und 4 gezeigten Ausführungsbeispiel lediglich den Elektromagneten 17 steuert, kann dieser Schalter auch Bestandteil eines elektrischen Steuerungskreises sein, der die Spannungsversorgung der Heizeinrichtung schaltet. In diesem Fall ist es nicht mehr möglich, daß die Heizvorrichtung durch manuelles Niederhalten des Schlittens 1 in seiner unteren Endstellung solange mit ihrer Spannungsversorgung verbunden bleibt, wie der Benutzer des Brotrösters den Handgriff 20 nicht losläßt. Eine derartige Verwendung des Schalters 15 hat den Vorteil, daß die Heizvorrichtung des Brotrösters unter keinen Umständen mit ihrer Spannungsversorgung verbunden sein kann, wenn sich die Krümelschale 8 nicht in ihrer Endlage befindet.

## Patentansprüche

1. Elektrischer Brotröster mit einem Gehäuse, welches eine eine elektrische Heizvorrichtung aufweisende Röstkammer umschließt und mit einem mittels eines Handgriffs (20) längs einer Führung (2) und gegen die Wirkung einer Federkraft von einer Ausgabestellung in eine Betriebsstellung verschiebbaren Schlitten (1), der mit einer Röstgutauflage (3) verbunden ist, die sich dabei innerhalb der Röstkammer nach unten bewegt, und mit einer unterhalb der Röstgutauflage (3) sich erstreckenden Krümelauffangschale (8), die in den Brotröster eingeschoben werden kann, wobei zur Inbetriebnahme der Heizvorrichtung der Schlitten (1) in seine Betriebsstellung gebracht werden muß, in der er für die Dauer des Röstvorgangs durch eine Arretiervorrichtung festgehalten werden kann,

**dadurch gekennzeichnet,**

daß die Arretiervorrichtung einen um einen Lagerpunkt (11) und parallel zur Bewegungsebene des Schlittens (1) drehbaren Schwenkhebel (6) aufweist, der seinerseits an seinem einen Ende eine Haken (6a) und an seinem anderen Ende einen in einem Langloch (10) geführten Zapfen (6c) aufweist und unter der Wirkung einer unterhalb des Lagerpunktes (11) in horizontaler Richtung angreifenden ersten Federkraft (12) steht, wobei der Haken (6a) mit einer an einem Bügel (4) des Schlittens (1) angebrachten Rastnase (5) so zusammenwirkt, daß beide zusammen den Schlitten (1) in seiner Betriebsstellung arretieren können, und daß ein horizontal beweglicher Schieber (7′) vorhanden ist, an dem das Langloch (10) ausgebildet ist und der horizontal durch Einschieben der Krümelauffangschale (8) gegen eine zweite, zwischen einer Stirnwand (16) des Brotrösters und dem Schieber (7) wirkende Federkraft (14) bewegt werden kann, wobei die beiden entgegengesetzt wirkenden Federkräfte (12, 14) und die Lage und die Abmessungen des Langloches (10) so aufeinander abgestimmt sind, daß der Schieber (7) und damit auch der Schwenkhebel (6) bei nicht bis in ihre Endlage eingeschobener Krümelauffangschale (8) eine Stellung einnehmen, in der der Haken (6a) sich nicht mehr im Wirkungsbereich der Rastnase (5) befindet, so daß in diesem Fall die Arretiervorrichtung nicht wirksam wird, wenn der Schlitten (1) von seiner Ausgabe- in Richtung auf seine Betriebsstellung hin bewegt wird, oder aber wieder unwirksam wird, wenn der Schlitten (1) zuvor durch die Arretiervorrichtung bereits in seiner Betriebsstellung festgehalten worden und erst danach die Krümelauffangschale (8) aus ihrer Endlage wieder entfernt worden ist.

2. Elektrischer Brotröster mit einem Gehäuse, welches eine eine elektrische Heizvorrichtung aufweisende Röstkammer umschließt und mit einem mittels eines Handgriffs (20) längs einer Führung (2) und gegen die Wirkung einer Federkraft von einer Ausgabestellung in eine Betriebsstellung verschiebbaren Schlitten (1), der mit einer Röstgutauflage (3) verbunden ist, die sich dabei innerhalb der Röstkammer nach unten bewegt, und mit einer unterhalb der Röstgutauflage (3) sich erstreckenden Krümelauffangschale (8), die in den Brotröster eingeschoben werden kann, wobei zur Inbetriebnahme der Heizvorrichtung der Schlitten (1) in seine Betriebsstellung gebracht werden muß, in der er für die Dauer des Röstvorgangs durch eine Arretiervorrichtung festgehalten werden kann,

**dadurch gekennzeichnet,**

daß die Arretiervorrichtung ein mit dem Schlitten (1) verbundenes Joch (18) aufweist, welches in der Betriebsstellung des Schlittens (1) einem Elektromagneten (17) gegenüberliegt, und daß der Elektromagnet (17) dann mit Strom versorgt und dadurch aufgrund der zwischen dem Joch (18) und dem Elektromagneten (17) auftretenden magnetischen Kräfte auch der Schlitten (1) arretiert wird, wenn ein ihm zugeordneter Schalter (15) geschlossen ist, was nur dann der Fall ist, wenn die Krümelauffangschale (8) bis in ihre Endlage in das Gehäuse des Brotrösters eingesetzt ist.

3. Brotröster nach Anspruch 2,

**dadurch gekennzeichnet,**

daß ein Schieber (7″) vorhanden ist, der von der Krümelauffangschale (8) gegen die Wirkung einer Federkraft (14) verschoben werden kann und daß der Schieber (7) einen Ansatz (7c) aufweist, der bei nicht bis in ihre Endlage eingeschobener Krümelauffangschale (8) einen Schalterbügel (15a) des Schalters (15) derart auslenkt, daß eine am Schalterbügel (15a) ausgebildete Kontaktfläche (15b) die ihr zugeordnete Gegenkontaktfläche (15c) nicht mehr berührt, wodurch die Stromversorgung des Elektromagneten (17) unterbrochen wird.

4. Brotröster nach Anspruch 3,

**dadurch gekennzeichnet,**

daß die Federkraft (14) zwischen einer Stirnwand (16) des Brotrösters und dem ersten Ansatz (7c) des Schiebers (7) wirkt, daß auch der Schieber (7) in der Führung (2) geführt wird und einen zweiten Ansatz (7b) aufweist, der mit einem der Krümelauffangschale (8) angeformten Winkelstück (9) zusammenwirkt.

5. Brotröster nach Anspruch 3,

**dadurch gekennzeichnet,**

daß der Schalter (15) sowohl die Stromversorgung des Elektromagneten (17) als auch die der Heizvorrichtung steuert.

## Claims

1. An electric bread toaster comprising a housing which encloses a toasting chamber in which an electric heating unit is contained, a carriage (1) which is displaceable by -means of a handle portion (20) along a guideway (2) and against spring action from a receiving position into an operating position, said carriage being connected with a toast rack (3) for downward movement within said toasting chamber, and a crumb collecting tray (8) which extends below said toast rack (3) and is insertable into the bread toaster, said carriage (1) being required to be brought into its said operating position for energization of said heating unit, in which position it can be retained by a locking mechanism for the duration of the toasting cycle,

**characterized in that**

said locking mechanism includes a pivoted lever (6) adapted to pivot about a pivot point (11) and parallel to the plane of motion of said carriage (1), said lever having at its one end a hook member (6a) and at its other end a trunnion (6c) carried in an elongated hole (10), said lever being exposed to the action of a first spring (12) acting in horizontal direction below said pivot point (11), said hook member (6a) cooperating with a detent nose (5) provided on a bracket (4) of said carriage (1) such that said cooperating members are in a position to lock said carriage (1) in said operating position, that a horizontally movable slide member (7) is provided in which said elongated hole (10) is formed and which is movable horizontally by insertion of said crumb collecting tray (8) against the force of a second spring (14) acting intermediate an end wall (16) of the bread toaster and said slide member (7), with the two opposed spring forces (12, 14) and the location and dimensions of said elongated hole (10) being relatively coordinated such that, with said crumb collecting tray (8) not fully inserted to its end position, said slide member (7) and accordingly also said pivoted lever (6) assume a position in which said hook member (6a) is no longer inside the range of action of said detent nose (5), so that in this event said locking mechanism does not become effective when said carriage (1) is moved from said receiving position in the direction of said operating position, or its locking engagement is released when said carriage (1) is previously retained in said operating position by said locking mechanism and said crumb collecting tray (8) is only subsequently removed from said end position.

2. An electric bread toaster comprising a housing which encloses a toasting chamber in which an electric heating unit is contained, a carriage (1) which is displaceable by means of a handle portion (20) along a guideway (2) and against spring action from a receiving position into an operating position, said carriage being connected with a toast rack (3) for downward movement within said toasting chamber, and a crumb collecting tray (8) which extends below said toast rack (3) and is insertable into the bread toaster, said carriage (1) being required to be brought into its said operating position for energization of said heating unit, in which position it can be retained by a locking mechanism for the duration of the toasting cycle,

**characterized in that**

said locking mechanism includes a yoke member (18) connected with said carriage (1) and, in the operating position of said carriage (1), lying opposite an electromagnet (17), current being supplied to said electromagnet (17) to lock said carriage (1) in place due to the magnetic forces occurring between said yoke member (18) and said electromagnet (17) if an associated switch (15) is closed, which is the case only if said crumb collecting tray (8) is fully inserted to its said end position in said housing of the bread toaster.

3. The bread toaster as claimed in claim 2,

**characterized in that**

a slide member (7) is provided which is displaceable by said crumb collecting tray (8) against spring force of said spring (14), said slide member (7) including a first projection (7c) which, with said crumb collecting tray (8) not fully inserted to its said end position, displaces a bow contact (15a) of said switch (15) such that a contact surface (15b) provided on said bow contact (15a) is no longer in contact with an associated mating contact surface (15c), whereby the supply of electrical energy to said electromagnet (17) is interrupted.

4. The bread toaster as claimed in claim 3,

**characterized in that**

the force of said spring (14) acts between an end wall (16) of the bread toaster and said first projection (7c) of said slide member (7), and also said slide member (7) is guided in said guideway (2) and includes a second projection (7b) which cooperates with an elbow section (9) formed on said crumb collecting tray (8).

5. The bread toaster as claimed in claim 3,

**characterized in that**

said switch (15) controls the supply of electrical energy to both said electromagnet (17) and said heating unit.

## Revendications

1. Grille-pain électrique comportant une enveloppe qui enferme une chambre de grillage présentant un dispositif de chauffage électrique, un organe coulissant (1) qui, au moyen d'une poignée (20), peut être déplacé le long d'un guide (2) et contre l'action d'une force élastique, d'une position sortie à une position de fonctionnement, ledit organe coulissant étant lié à un support de produit à griller qui se déplace vers le bas à l'intérieur de la chambre de grillage, et une cuvette à miettes (8) qui s'étend en dessous du support de produit à griller (3) et qui peut être introduite dans le grille-pain, la mise en fonctionnement du dispositif de chauffage exigeant que l'organe coulissant (1) soit mis à sa position de fonctionnement dans laquelle il peut être maintenu par un dispositif arrêtoir pendant la durée du grillage,

caractérisé

par le fait que le dispositif arrêtoir présente un levier pivotant (6) capable de tourner autour d'un point d'appui (11), parallèlement au plan de déplacement de l'organe coulissant (1), ce levier présentant pour sa part, en sa première extrémité, un crochet (6a) et, en son autre extrémité, un téton (6c) guidé dans un trou allongé (10), et se trouvant sous l'action d'une force élastique (12) attaquant en direction horizontale, en dessous du point d'appui (11), le crochet (6a) coopérant avec un nez de verrouillage (5) aménagé sur un arceau (4) de l'organe coulissant (1), de manière telle qu'ils puissent conjointement arrêter ledit organe coulissant (1) dans sa position de fonctionnement, et par le fait qu'il est prévu un coulisseau mobile horizontalement (7′) dans lequel trou allongé (10) est aménagé, ce coulisseau pouvant être déplacé horizontalement, sous l'effet de l'introduction de la cuvette à miettes (8), contre une deuxième force élastique (14) agissant entre une paroi frontale (16) du grille-pain et le coulisseau (7), les deux forces élastiques (12, 14) agissant en opposition, et la position ainsi que les dimensions du trou allongé (10) étant mutuellement harmonisées de manière telle que le coulisseau (7), donc aussi le levier pivotant (6), prennent, lorsque la cuvette à miettes (8) n'est pas introduite jusqu'à sa position extrême, une position dans laquelle le crochet (6a) ne se trouve plus dans la zone d'action du nez de verrouillage (5), de sorte que dans ce cas le dispositif arrêtoir est inopérant si l'organe coulissant (1) est déplacé de sa position sortie vers sa position de fonctionnement, ou redevient inactif si l'organe coulissant (1) a préalablement été maintenu à sa position de fonctionnement par le dispositif arrêtoir et la cuvette à miettes (8) n'a été éloignée de sa position extrême qu'après cela.

2. Grille-pain électrique comportant une enveloppe qui enferme une chambre de grillage présentant un dispositif de chauffage électrique, un organe coulissant (1) qui, au moyen d'une poignée (20), peut être déplacé le long d'un guide (2) et contre l'action d'une force élastique, d'une position sortie à une position de fonctionnement, ledit organe coulissant étant lié à un support de produit à griller qui se déplace vers le bas à l'intérieur de la chambre de grillage, et une cuvette à miettes (8) qui s'étend en dessous du support de produit à griller (3) et qui peut être introduite dans le grille-pain, la mise en fonctionnement du dispositif de chauffage exigeant que l'organe coulissant (1) soit mis à sa position de fonctionnement dans laquelle il peut être maintenu par un dispositif arrêtoir pendant la durée du grillage,

caractérisé

par le fait que le dispositif arrêtoir présente une armature (18) liée à l'organe coulissant (1), laquelle se trouve en vis-à-vis d'un électroaimant (17) lorsque ledit organe coulissant (1) est en position de fonctionnement, et par le fait que l'électroaimant (17) est alimenté en courant avec ce résultat que l'organe coulissant (1) est arrêté sous l'effet des forces magnétiques produites entre l'armature (18) et l'électroaimant (17), lorsqu'un interrupteur (15) qui lui est conjugué est fermé, ce qui n'est le cas que si la cuvette à miettes (8) a été introduite jusqu'à sa position extrême dans l'enveloppe du grille-pain.

3. Grille-pain selon revendication 2,

caractérisé

par le fait qu'il est prévu un coulisseau (7″) que la cuvette à miettes (8) peut déplacer contre l'action d'une force élastique (14), et par le fait que le coulisseau (7) présente un saillant (7c) qui, lorsque la cuvette à miettes (8) n'est pas introduite jusqu'à sa position extrême, dévie une barrette (15a) de l'interrupteur (15) de manière qu'une surface de contact (15b) aménagée sur ladite barrette (15a) ne touve plus la surface de contact qui lui est conjuguée (15c), de sorte que l'alimentation en courant de l'électroaimant (17) se trouve interrompue.

4. Grille-pain selon revendication 3,

caractérisé

par le fait que la force élastique (14) agit entre une paroi frontale (16) du grille-pain et le premier saillant (7c) du coulisseau (7), par le fait que le coulisseau (7), est guidé, lui aussi, dans le guide (2) et présente un deuxième saillant (7b) qui coopère avec une pièce en forme de cornière (9) formée sur la cuvette à miettes (8).

5. Grille- pain selon revendication 3,

caractérisé

par le fait que l'interrupteur (15) commande aussi bien l'alimentation en courant de l'électroaimant (17) que celle du dispositif de chauffage.

FIG.1

EP 0 361 072 B1

FIG.2

FIG.3

EP 0 361 072 B1

FIG.4